# EUROPEAN PATENT SPECIFICATION

(11) **EP 4 470 194 B1**
(45) Date of publication and mention of the grant of the patent: **06.05.2026**
(21) Application number: 23775303.3
(22) Date of filing: 22.03.2023
(51) Int. Cl.: H04L 67/51, H04L 67/14, H04W 80/10, H04L 65/1043, H04L 65/1069, H04L 65/4061

(54) **SYSTEM AND METHOD FOR ENABLING NOTIFICATION MANAGEMENT IN AS SEAL SERVICE IN A WIRELESS COMMUNICATION SYSTEM**
SYSTEM UND VERFAHREN ZUR ERMÖGLICHUNG EINER BENACHRICHTIGUNGSVERWALTUNG IN EINEM ALS-SIEGEL-DIENST IN EINEM DRAHTLOSEN KOMMUNIKATIONSSYSTEM
SYSTÈME ET PROCÉDÉ POUR PERMETTRE UNE GESTION DE NOTIFICATION EN TANT QUE SERVICE SEAL DANS UN SYSTÈME DE COMMUNICATION SANS FIL

(30) Priority: 22.03.2022 IN 202241015888; 16.02.2023 IN 202241015888
(43) Date of publication of application: 04.12.2024
(73) Proprietor: Samsung Electronics Co., Ltd, Suwon-si, Gyeonggi-do 16677 (KR)
(72) Inventor: RAMAMOORTHY, Arunprasath, Bangalore Karnataka 560037 (IN); PATTAN, Basavaraj Jayawant, Bangalore Karnataka 560037 (IN); SHAH, Sapan Pramodkumar, Bangalore Karnataka 560037 (IN)
(74) Representative: Gulde & Partner
(86) International application number: PCT/KR2023/003801
(87) International publication number: WO 2023/182807

(56) References cited:
- WO-A1-2021/151507
- WO-A1-2022/007904
- US-A1- 2021 007 178
- US-A1- 2021 306 382
- AT&T: "Edge Notification Server", vol. SA WG6, no. e-meeting; 20220214 - 20220222, 18 February 2022 (2022-02-18), XP052198641, Retrieved from the Internet <URL:https://ftp.3gpp.org/tsg_sa/WG6_MissionCritical/TSGS6_047-e/docs/S6-220274.zip S6-220274_was_S6-220028_Edge Notification Server.doc> [retrieved on 20220218]
- "3rd Generation Partnership Project; Technical Specification Group Services and System Aspects; Service Enabler Architecture Layer for Verticals (SEAL); Functional architecture and information flows; (Release 17)", 3GPP STANDARD; TECHNICAL SPECIFICATION; 3GPP TS 23.434, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V17.4.0, 31 December 2021 (2021-12-31), Mobile Competence Centre ; 650, route des Lucioles ; F-06921 Sophia-Antipolis Cedex ; France, pages 1 - 182, XP052083587
- AT&T: "Edge Notification Server", 3GPP DRAFT; S6-220028, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. e-meeting; 20220214 - 20220222, 31 January 2022 (2022-01-31), Mobile Competence Centre ; 650, route des Lucioles ; F-06921 Sophia-Antipolis Cedex ; France, XP052104560

## Description

### [Technical Field]

Embodiments disclosed herein relate to wireless communication system, and more specifically, the present disclosure relates to systems and methods for enabling subscription and notification mechanism in a Service Enabler Architecture Layer (SEAL) service which can be leveraged by vertical applications.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmi ssion and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using **OAM** (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

AT&T: "Edge Notification Server", 3GPP DRAFT; S6-220274 proposes an enhanced notification service to the EEC.

US 2021/306382 A1 discloses a method comprising sending at least one request with a plurality of parameters to a server SIP node for any type of data over a SIP, irrespective of the availability of an event package, wherein a custom subscription is managed by creating, modifying, deleting, notifying, or terminating the subscription using said parameters, further including providing a subscription for a location management service associated with the server SIP node over the SIP regardless of event package availability, and enabling the server SIP node to allow a client SIP node to manage location information using the plurality of parameters.

### [Disclosure of Invention]

### [Technical Problem]

The principal object of the embodiments herein is to disclose systems and methods for enabling a notification management service in a Service Enabler Architecture Layer (SEAL) service for offering notification functionality to one or more verticals.

Another object of the embodiments herein is to disclose systems and methods for enabling vertical applications to subscribe and receive notifications from one or more vertical application layer (VAL) servers.

Another object of the embodiments herein is to disclose systems and methods for offloading the complexity of building subscription and notification logic at the vertical enabler layer.

Another object of the embodiments herein is to disclose systems and methods for provisioning required functional model, information flows and procedures for enabling the notification management service in a SEAL service.

Another object of the embodiments herein is to disclose systems and methods for managing a notification where multiple verticals can receive the notifications using a single channel.

### [Solution to Problem]

The invention is defined by the appended claims. The description that follows is subjected to this limitation. Any disclosure lying outside the scope of said claims is only intended for illustrative as well as comparative purposes.

Accordingly, the embodiments herein provide a method performed by a user equipment (UE) in a wireless communication system. The method includes receiving, by a notification management client of the UE from a vertical application layer (VAL) client of the UE, a notification management request message to receive a notification from a VAL server. Further, the method includes transmitting, by the notification management client of the UE to a notification management server, a create notification channel request message for a notification channel. Further, the method includes receiving, by the notification management client of the UE from the notification management server, a create notification channel response message. Further, the method includes transmitting, by the notification management client of the UE to the notification management server, an open notification channel message to start receiving a notification message based on the create notification channel response message. Further, the method includes transmitting, by the notification management client of the UE to the VAL client of the UE, an indication of success or failure to start receiving the notification.

Accordingly, the embodiments herein provide a method performed by a notification management server in a wireless communication system. The method includes receiving, from a notification management client of UE, a create notification channel request message for a notification channel based on a notification management request message. Further, the method includes transmitting, to the notification management client of the UE, a create notification channel response message. Further, the method includes receiving, from the notification management client of the UE, an open notification channel message to start receiving a notification message based on the create notification channel response message.

Accordingly, the embodiments herein provide a user equipment (UE) in a wireless communication system. The UE includes a transceiver, and a controller coupled with the transceiver. The controller configured to receive, by a notification management client of the UE from a vertical application layer (VAL) client of the UE, a notification management request message to receive a notification from a VAL server. The controller configured to transmit, by the notification management client of the UE to a notification management server, a create notification channel request message for a notification channel. The controller configured to receive, by the notification management client of the UE from the notification management server, a create notification channel response message. The controller configured to transmit, by the notification management client of the UE to the notification management server, an open notification channel message to start receiving a notification message based on the create notification channel response message. The controller configured to transmit, by the notification management client of the UE to the VAL client of the UE, an indication of success or failure to start receiving the notification.

Accordingly, the embodiments herein provide a notification management server in a wireless communication system. The server includes a transceiver, and a controller coupled with the transceiver. The controller configured to receive, from a notification management client of UE, a create notification channel request message for a notification channel based on a notification management request message. The controller configured to transmit, to the notification management client of the UE, a create notification channel response message. The controller configured to receive, from the notification management client of the UE, an open notification channel message to start receiving a notification message based on the create notification channel response message.

These and other aspects of the embodiments herein will be better appreciated and understood when considered in conjunction with the following description and the accompanying drawings. It should be understood, however, that the following descriptions, while indicating at least one embodiment and numerous specific details thereof, are given by way of illustration and not of limitation. Many changes and modifications may be made within the scope of the embodiments herein, and the embodiments herein include all such modifications.

### [Advantageous Effects of Invention]

Aspects of the present disclosure provide efficient communication methods in a wireless communication system.

### [Brief Description of Drawings]

Embodiments herein are illustrated in the accompanying drawings, through out which like reference letters indicate corresponding parts in the various figures. The embodiments herein will be better understood from the following description with reference to the drawings, in which:
FIG. 1 illustrates a system for enabling a notification management in a Service Enabler Architecture Layer (SEAL) service, according to various embodiments of the present disclosure;
FIG. 2 illustrates a detailed block diagram of a notification management server in the SEAL service, according to various embodiments of the present disclosure;
FIG. 3 illustrates a method for enabling the notification management in the SEAL service, according to various embodiments of the present disclosure;
FIG. 4 illustrates a procedure for receiving notifications from the notification management server by the notification management client, according various to embodiments of the present disclosure;
FIG. 5 illustrates a procedure of how the notification management client deletes a notification channel and the VAL client deletes a subscription with the VAL server, according to various embodiments of the present disclosure;
FIG. 6 illustrates a procedure for receiving notifications from the notification management server by the notification management client, where subscription is managed by the notification management client, according to various embodiments of the present disclosure;
FIG. 7 illustrates a procedure of how the notification management client deletes a notification channel and subscription that is no longer needed, according to various embodiments of the present disclosure;
FIG. 8 illustrates a procedure for receiving notifications from the notification management server by the notification management client by reusing the existing notification channel, according various to embodiments of the present disclosure;
FIG. 9 illustrates a procedure to stop receiving notifications from the notification management server by the notification management client, according to various embodiments of the present disclosure;
FIG. 10 illustrates a procedure to modify the existing subscription data by the notification management client based on the request from the VAL client, according to various embodiments of the present disclosure; and
FIG. 11 illustrates a block diagram of a terminal (or a user equipment (UE), according to various embodiments of the present disclosure.
FIG. 12 illustrates a block diagram illustrating a structure of a network entity according to an embodiment of the disclosure.

### [Mode for the Invention]

Networking architectures have grown increasingly and are complex in mobile communication environments. Due to increase in mobile communications, and an increase in the number of mobile users, access network resources can be shared among multiple service providers. This resulted in significant challenges in managing notifications for a subscriber which involves communicating notifications to multiple destinations.

Currently, one or more applications utilize a notification mechanism to communicate notifications to multiple destinations. The 3rd Generation Partnership Project (3GPP) document TS 23.434 has identified common services (for example, group management, configuration management, location management) which are used by many verticals. The 3GPP document has further provided a functional architecture for Service Enabler Architecture Layer (SEAL) and procedures, information flows and Application Programming Interface (API)s for each service within the SEAL in order to support vertical applications over a 3GPP system. Most of the vertical enablers developed in 3GPP require notification functionality. This notification functionality is developed as part of each vertical which may lead to duplication and waste of effort. Therefore, each vertical needs to open a separate channel by developing silos for receiving the notifications.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

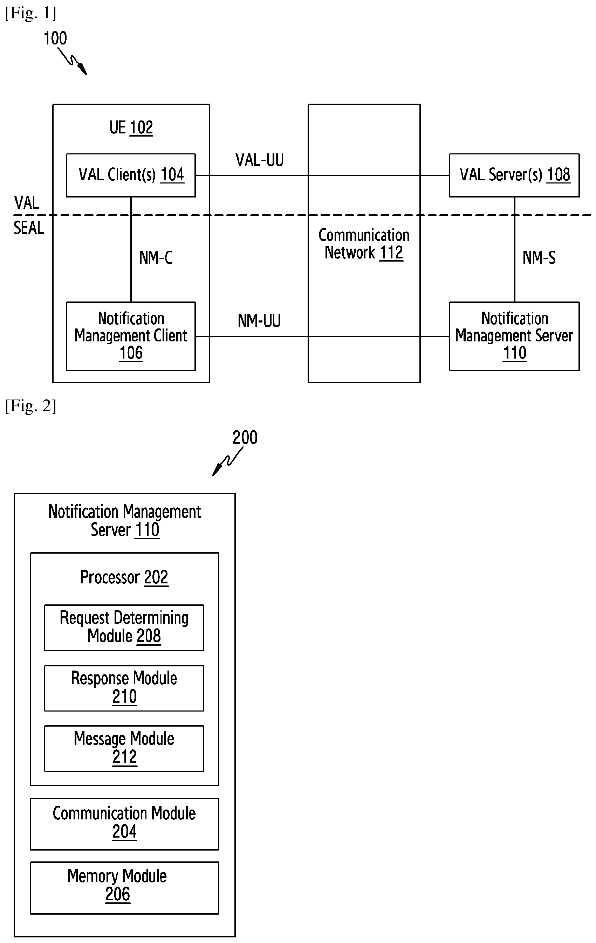

The embodiments herein achieve systems and methods for enabling subscription and notification mechanism in a Service Enabler Architecture Layer (SEAL) service which can be leveraged by one or more vertical applications. Referring now to the drawings, and more particularly to FIGS. 1 through 10, where similar reference characters denote corresponding features consistently throughout the figures, there are shown embodiments.

FIG. 1 through FIG. 12, discussed below, and the various embodiments used to describe the principles of the present disclosure in this patent document are by way of illustration only and should not be construed in any way to limit the scope of the present disclosure. Those skilled in the art will understand that the principles of the present disclosure may be implemented in any suitably arranged system or device.

FIG. 1 illustrates a system 100 for enabling a notification management in a Service Enabler Architecture Layer (SEAL) service. The system 100 can be organized with one or more functional entities for accomplishing one or more notification management functions required for one or more vertical applications of a User Equipment (UE) 102. The functional entities comprise a notification management client 106 and a notification management server 110. The UE 102 can comprise one or more Vertical Application Layer (VAL) clients 104, where the VAL clients 104 can communicate with at least one VAL server 108 and the notification management server 110 via the notification management client 106 for receiving notifications.

In an embodiment herein, the VAL client 104 and the notification management client 106 communicate to the VAL server 108 and the VAL server 108 through a communication network 112. The communication network 112 may be in the form of a wireless communication network, which may comprise but not limited to, GPS, GSM, Wi-Fi, Bluetooth low energy, NFC, and so on. The wireless communication may further comprise one or more of Bluetooth, ZigBee, a short-range wireless communication such as UWB, and a medium-range wireless communication such as Wi-Fi or a long-range wireless communication such as 3G/4G/5G/6G and non-3GPP technologies or WiMAX, according to the usage environment.

In an embodiment herein, the notification management server 110 can interact with the notification management client 106 and the VAL server 108 for managing a plurality of notification management functions. Examples of the notification management functions can be, but not limited to, notification messages, a create notification channel request, a create notification channel response, an open notification channel, a delete notification channel request, a delete notification channel response, a subscription for notification request, a subscription for notification response, a modify subscription for notification request, a modify subscription for notification response, an add VAL service to notification subscription request, an add VAL service to notification subscription response, a delete VAL service from notification subscription request, a delete VAL service from notification subscription response, a delete notification subscription request, and a delete notification subscription response. The notification management server 110 can act as an exposing function of the Common API Framework (CAPIF). The notification management server 110 can support interactions with a corresponding notification management server in distributed SEAL deployments. The notification management server 110 functional entity can be supported by a Session Initiation Protocol (SIP) Application Server (AS) and Hypertext Transfer Protocol (HTTP) server functional entities of the signaling control plane.

In an embodiment herein, the VAL client 104 of the UE 102 can transmit at least one notification management request to the notification management client 106 to start or stop receiving at least one notification message from the VAL server 108. Table 1 describes an information flow for the notification management request from the VAL client 104 to the notification management client 106. The notification management request can comprise, but not limited to, requester identity, VAL service ID, VAL application identifier, subscription event data, and request type.

**[Table 1]**

| **Information Element (IE)** | **Status** | **Description** |
|---|---|---|
| Requester Identity | M | The identity of the VAL user or VAL UE IDs performing the request. |
| VAL service ID | M | Identity of the VAL service for which the VAL client 104 wants to start or stop receiving notifications. |
| VAL application identifier | M | Identity of the VAL application residing in the VAL UE 102 for which the VAL client 104 wants to start or stop receiving notifications |
| Subscription Event Data (NOTE 1) | O | Details of the notification event type and data for which the VAL client 104 is subscribing for or for modifying the existing subscription data |
| Request type | M | This IE indicates whether this request is to start or stop receiving |
| | | notifications or for modifying the existing notification event data |
| NOTE 1 : If this element is not present and if the request type is stop, it implies that the VAL client 104 wants to stop receiving notifications for all types of events | | |

The VAL client 104 can receive an indication of success or failure of the notification management request from the notification management client 106. Table 2 describes an information flow for the notification management response from the notification management client 106 to the VAL client 104. The notification management response can comprise result(s) for the request.

**[Table 2]**

| **Information Element** | **Status** | **Description** |
|---|---|---|
| Result | M | Indicates the success or failure for the notification management request |

The VAL client 104 can transmit at least one subscription for notification request to the VAL server 108, on receiving an indication of success for receiving the notification message. Table 3 describes an information flow for the subscription for notification request from the VAL client 104 to the VAL server 108. The subscription for notification request can comprise, but not limited to, identity of the VAL client 104, requester identity, VAL service ID, VAL application identifier, subscription data, validity, and callback Uniform Resource Locator (URL).

**[Table 3]**

| **Information Element** | **Status** | **Description** |
|---|---|---|
| Identity | M | Identity of the VAL client 104 |
| Requester Identity | M | Identity of the VAL UE 102 or VAL user intending to receive notifications from the VAL server 108 |
| VAL service ID | M | Identity of the VAL service for which the VAL client 104 wants to receive notifications |
| VAL application ID | M | Identity of the VAL application residing in the VAL UE 102 for which notification message to be delivered |
| Subscription Data | M | Details of the notification event type and data for which the VAL client 104 is subscribing for |
| Validity | M | How long the subscription to notification will last (i.e., subscription lifetime); this value shall be the returned value in the create notification channel response |
| Callback URL | M | The endpoint URL where to send the notification message |

The VAL client 104 can receive at least one subscription for notification response from the VAL server 108, where the subscription for notification response indicates success or failure of the subscription for notification. Table 4 describes an information flow for the subscription for notification response from the VAL server 108 to the VAL client 104. The subscription for notification response can comprise, but not limited to, identity, validity duration, and subscription result.

**[Table 4]**

| **Information Element** | **Status** | **Description** |
|---|---|---|
| Identity | M | Identity of the requested VAL client 104 |
| Validity duration | M | How long the subscription of notification will last (i.e., subscription lifetime) as granted by the VAL server 108 |
| Subscription Result | M | Indicates if the subscription is success or failure |

The VAL client 104 can transmit at least one delete notification subscription request to the VAL server 108 for removing corresponding subscription with the VAL server 108. The VAL client 104 can receive an indication of success of deletion of the notification channel from the notification management client 106 to stop receiving the notification message. Based on the received indication, the VAL client 104 can transmit the delete notification subscription request. Table 5 describes an information flow for the delete notification subscription request from the VAL client 104 to the VAL server 108. The delete notification subscription request can comprise, but not limited to, identity and subscription identity.

**[Table 5]**

| **Information Element** | **Status** | **Description** |
|---|---|---|
| Identity | M | Identity of the requesting VAL client 104 |
| Subscription identity | M | Identifies the subscription to be deleted |

The VAL client 104 can receive at least one delete notification subscription response from the VAL server 108 indicating acknowledgement of the notification subscription deletion request. Table 6 describes an information flow for the delete notification subscription response from the VAL server 108 to the VAL client 104. The delete notification subscription response can comprise result(s) for the request.

**[Table 6]**

| **Information Element** | **Status** | **Description** |
|---|---|---|
| Result | M | Indicates if the deletion of notification subscription is success or failure |

In an embodiment herein, the notification management client 106 functional entity can act as an application client for one or more notification management aspects. The notification management client 106 can interact with the notification management server 110. The notification management client 106 of the UE 102 can handle at least one subscription logic for receiving at least one notification message from the notification management server 110 and delivering the received notification message to the VAL client 104 of the UE 102. The notification management client 106 of the UE 102 can handle the transmission of the notification message based on a request received from the VAL client 104. The notification management client 106 functional entity can be supported by a signaling user agent and one or more HTTP client functional entities of a signaling control plane.

In an embodiment herein, the notification management client 106 can receive the notification management request from the VAL client 104 to start or stop receiving at least one notification message from the VAL server 108. The notification management client 106 can transmit an indication of success or failure of the received notification management request to the VAL client 104. The notification management client 106 can transmit at least one create notification channel request to the notification management server 110 to create at least one notification channel if the received at least one notification management request is to start receiving the at least one notification message. Table 7 describes an information flow for the create notification channel request from the notification management client 106 to the notification management server 110. The create notification channel request can comprise, but not limited to, a requestor identity, channel type, and validity duration.

**[Table 7]**

| **Information Element** | **Status** | **Description** |
|---|---|---|
| Requestor identity | M | Identity of the requesting notification management client 106 |
| Channel type | M | Indicates of PULL or PUSH method to be used for delivering the notification messages |
| Validity Duration | M | How long the notification channel will last (i.e., channel lifetime) as requested by the notification management client 106 |

The notification management client 106 can receive at least one create notification channel response from the notification management server 110 for creating the notification channel request.

The notification management client 106 can transmit an open notification channel to the notification management server 110 to start receiving the notification message, on receiving the create notification channel response. Table 8 describes an information flow for the open notification channel from the notification management client 106 to the notification management server 110. The open notification channel can comprise, but not limited to identity, notification URL, and Channel ID.
a.

**[Table 8]**

| **Information Element** | **Status** | **Description** |
|---|---|---|
| Identity | M | Identity of the requesting notification management client 106 |
| Notification URL | M | The URL to receive the notification message |
| Channel ID | M | Identifies the notification channel and the value shall be same as returned in Create notification channel response |

The notification management client 106 can transmit an indication of success or failure to the VAL client 104 to start receiving the notification message. In an embodiment herein, the create channel request and the open notification channel can be clubbed as one single request.

Further, since the notification management client 106 can serve multiple VAL applications residing on the UE 102, it is required to identify to which VAL application the received notification message to be delivered. Thus, the present disclosure proposes to use an Application ID which serves as a unique identifier to identify an application. The VAL application, when requesting the notification management client 106, shall provide the Application ID along with VAL Service ID, VAL UE ID, and VAL user ID.

The notification management client 106 can receive the notification management request from the VAL client 104 to stop receiving the notification messages from the VAL server 108. The notification management client 106 can transmit at least one delete notification channel request to the notification management server 110 for deleting at least one notification channel if the received notification management request is to stop receiving the notification messages. Table 9 describes an information flow for the delete notification channel request from the notification management client 106 to the notification management server 110. The delete notification channel request can comprise, but not limited to, identity and channel ID.

**[Table 9]**

| **Information Element** | **Status** | **Description** |
|---|---|---|
| Identity | M | Identity of the requesting notification management client 106 |
| Channel ID | M | Identifies the notification channel to be deleted |

The notification management client 106 can receive at least one delete notification channel response from the notification management server 110. The notification management client 106 can further transmit an indication of success or failure of deletion of the notification channel to the VAL client 104.

In an embodiment herein, a reference point NM-C can support interactions related to one or more notification management functions between the VAL client(s) 104 and the notification management client 106 within the VAL UE 102. A reference point NM-UU can support interactions related to one or more notification management functions between the notification management client 106 and the notification management server 110. A reference point NM-S can support interactions related to one or more notification management functions between the VAL server(s) 108 and the notification management server 110. The reference point NM-S is an instance of CAPIF-2 reference point. A reference point VAL-UU can support interactions related to one or more notification management functions between the VAL client(s) 104 and the VAL server(s) 108. The reference points are communication interfaces between the functional entities. The reference points specify whether which protocol needs to be used for a specific communication etc.

FIG. 2 illustrates a detailed block diagram 200 of the notification management server 110 in the SEAL service. The notification management server 110 can be implemented in any computing device. The notification management server 110 comprises a plurality of modules such as a processor 202, a communication module 204, and a memory module 206.

In an embodiment herein, the processor 202 can be configured to manage one or more notification management functions between the VAL client 104, the notification management client 106, and the VAL server 108 to provide notification management as a SEAL service for one or more vertical applications of the UE 102. The processor 202 comprises a request determining module 208, a response module 210, and a message module 212.

The request determining module 208 can receive at least one create notification channel request from the notification management client 106 of the UE 102, where the notification management client 106 transmits the create notification channel request based on the notification management request received from VAL client 104 of the UE 102. The request determining module 208 can determine that the request received is for creating a notification channel by the notification management client 106 to start receiving the notification message from the VAL server 108.

The request determining module 208 can receive at least one delete notification channel request from the notification management client 106 of the UE 102, where the notification management client 106 transmits the delete notification channel request based on the notification management request received from VAL client 104 of the UE 102. The request determining module 208 can determine that the request received is for deleting a notification channel by the notification management client 106 to stop receiving the notification messages from the VAL server 108. The request determining module 208 determines the received requests by verifying the type of request stored with respect to protocol specific.

The response module 210 can transmit at least one create notification channel response with at least one endpoint URL and valid duration of the endpoint URL to the notification management client 106 to create the notification channel, based on the determined request. Table 10 describes an information flow for the create notification channel response from the notification management server 110 to the notification management client 106. The endpoint URL and the valid duration of the endpoint URL can be used by the VAL client 104, the VAL server 108 and the notification management client 106 to transmit and receive at least one notification message. The create notification channel response can comprise, but not limited to, identity, notification URL, callback URL, validity duration and channel ID.

**[Table 10]**

| **Information Element** | **Status** | **Description** |
|---|---|---|
| Identity | M | Identity of the requested notification management client 106 |
| Notification URL | O | The URL to receive the notification message if a PULL method is requested. For some PUSH method implementation (such as WebSockets) this URL is used to start the PUSH notification service from the notification management server 110 |
| Callback URL | O | The URL used by the notification management client 106 to subscribe to receive notifications from notification management server 110 |
| Validity duration | M | How long the notification channel will last (i.e., channel lifetime) as granted by the notification management server 110 |
| Channel ID | M | Unique identifier for the created notification channel |

The request determining module 208 can receive the open notification channel from the notification management client 106 to start receiving the notification message, after transmitting the create notification channel response. The notification management client 106 can indicate to the VAL client 104 of success or failure to start receiving the notification message. Further, the VAL client 104 can transmit at least one subscription for notification request to the VAL server 108 if the received indication is a success. The VAL client 104 can receive at least one subscription for notification response from the VAL server 108, where the subscription for notification response indicates success or failure of the subscription for notification.

The response module 210 can transmit at least one delete notification channel response to the notification management client 106 acknowledging the delete notification channel request. Table 11 describes an information flow for the delete notification channel response from the notification management server 110 to the notification management client 106. The delete notification channel response can comprise, but not limited to the identity and result(s) for the request.

**[Table 11]**

| **Information Element** | **Status** | **Description** |
|---|---|---|
| Identity | M | Identity of the requesting notification management client 106 |
| Result | M | Indicates if the deletion of the channel is success or failure |

The message module 212 can receive at least one notification message from the VAL server 108, where the notification message is generated by the VAL server 108 based on the subscription for notification request received from the VAL client 104. The message module 212 can transmit the notification message to the notification management client 106, and the notification management client 106 further can deliver the at least one notification message to appropriate VAL client 104. Table 12 describes an information flow for the notification message from the VAL server 108 to the message module 212 of the notification management server 110 and from the notification management server 110 to the notification management client 106. The notification message can comprise, but not limited to, identity, VAL application ID, VAL service ID, and event data.

**[Table 12]**

| **Information Element** | **Status** | **Description** |
|---|---|---|
| Identity | M | Identity of the VAL client 104 to whom this notification message to be sent |
| VAL Application ID | M | Identity of the VAL application residing in the VAL UE 102 this notification message is targeted |
| VAL Service ID | M | Identity of the VAL service for which this notification is generated |
| Event-data | M | This information element carries the details of the notification data such as type of the event and the data corresponding to the event |

In an embodiment herein, the processor 202 can be configured to process and execute data of a plurality of modules of the notification management server 110. The processor 202 may comprise one or more of microprocessors, circuits, and other hardware configured for processing. The processor 202 can be configured to execute instructions stored in the memory module 206. The processor 202 can be at least one of a single processer, a plurality of processors, multiple homogeneous or heterogeneous cores, multiple Central Processing Units (CPUs) of different kinds, microcontrollers, special media, and other accelerators. The processor 202 may be an application processor (AP), a graphics-only processing unit such as a graphics processing unit (GPU), a visual processing unit (VPU), and/or an Artificial Intelligence (AI)-dedicated processor such as a neural processing unit (NPU).

In an embodiment herein, the plurality of modules of the processor 202 of the notification management server 110 can communicate with the notification management client 106 and the VAL server 108 via the communication module 204. The communication module 204 through which the modules of the processor 202 communicate may be in the form of either a wired network or a wireless network, or a combination thereof. The wired and wireless communication networks may comprise but not limited to, GPS, GSM, LAN, Wi-Fi compatibility, Bluetooth low energy as well as NFC. The wireless communication may further comprise one or more of Bluetooth, ZigBee, a short-range wireless communication such as UWB, a medium-range wireless communication such as Wi-Fi or a long-range wireless communication such as 3G/4G/5G/6G or WiMAX, according to the usage environment.

In an embodiment herein, the memory module 206 may comprise one or more volatile and non-volatile memory components which are capable of storing data and instructions of the modules of the notification management server 110 to be executed. Examples of the memory module 206 can be, but not limited to, NAND, embedded Multi Media Card (eMMC), Secure Digital (SD) cards, Universal Serial Bus (USB), Serial Advanced Technology Attachment (SATA), solid-state drive (SSD), and so on. The memory module 206 may also include one or more computer-readable storage media. Examples of non-volatile storage elements may include magnetic hard discs, optical discs, floppy discs, flash memories, or forms of electrically programmable memories (EPROM) or electrically erasable and programmable (EEPROM) memories. In addition, the memory module 206 may, in some examples, be considered a non-transitory storage medium. The term "non-transitory" may indicate that the storage medium is not embodied in a carrier wave or a propagated signal. However, the term "non-transitory" should not be interpreted to mean that the memory module 206 is non-movable. In certain examples, a non-transitory storage medium may store data that can, over time, change (e.g., in Random Access Memory (RAM) or cache).

FIG. 2 illustrates an example modules of the notification management server 110, but it is to be understood that other embodiments are not limited thereon. In other embodiments, the notification management server 110 may include less or more number of modules. Further, the labels or names of the modules are used only for illustrative purpose and does not limit the scope of the disclosure. One or more modules can be combined together to perform same or substantially similar function in the notification management server 110.

In an embodiment herein, the VAL server 108 can generate the notification messages, on receiving the subscription for notification request. The VAL server 108 can transmit the generated notification messages to the message module 212 of the notification management server 110. Further, the notification management server 110 can transmit the notification messages to the notification management client 106, and the notification management client 106 can deliver the notification messages to the appropriate VAL client 104.

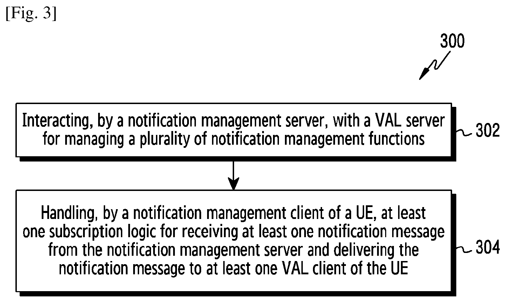

FIG. 3 illustrates a method 300 for enabling the notification management in the SEAL service. The method 300 includes interacting, by the notification management server 110, with the VAL server 108 for managing a plurality of notification management functions, as illustrated in step 302. The method 300 includes handling, by the notification management client 106 of the UE 102, at least one subscription logic for receiving at least one notification message from the notification management server 110 and delivering the notification message to appropriate VAL client 104 of the UE 102, as illustrated in step 304.

The various operations in method 300 may be performed in the order presented, in a different order or simultaneously. Further, in some embodiments, some operations listed in FIG. 3 may be omitted.

In an embodiment herein, a plurality of procedures and information flows for the notification management SEAL service is disclosed. The notification management procedures can be applied to on-network VAL services.

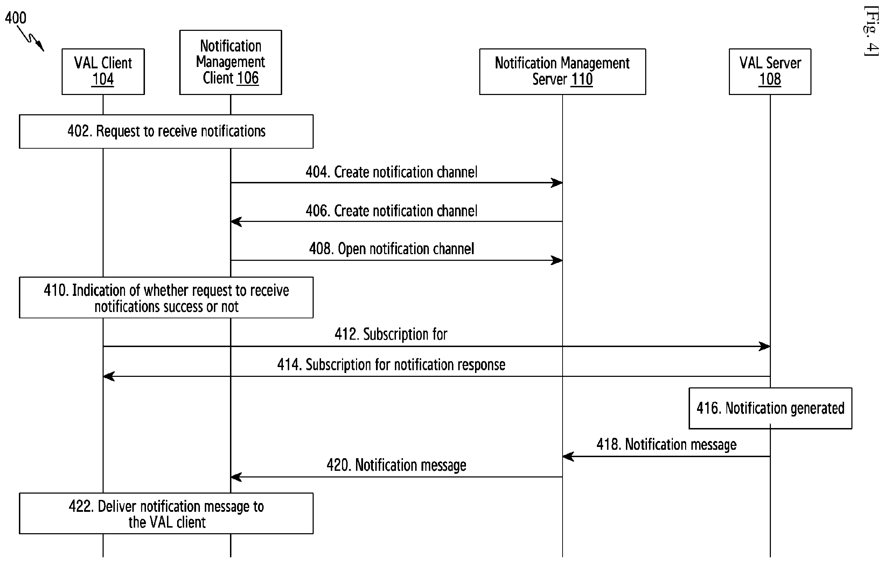

FIG. 4 illustrates a procedure 400 for receiving notifications from the notification management server 110 by the notification management client 106. Here, the VAL client 104 manages the subscription with the VAL server 108.

As illustrated in step 402, the VAL client 104 requests the notification management client 106 to receive notifications from the VAL server 108. The notification management client 106 can create notification channels (i.e., endpoint URLs), if not created already, to be used by the VAL server 108 to send a notification message. To create a notification channel, the notification management client 106 transmits a create notification channel request, as illustrated in step 404, to the notification management server 110. The desired validity duration for the channels to be used and the notification channel type such as PUSH, or PULL are included in the request.

The notification management server 110 transmits to the notification management client 106, as illustrated in step 406, the create notification channel response along with the endpoint URLs that can be used by the VAL server 108 to send the notification message and the notification management client 106 to receive the notification message. The notification management server 110 also includes what is the valid duration for the endpoint URLs to be used in the response. If the notification type is a PULL method, the notification management client 106 transmits an open notification channel to the notification management server 110 to start receiving the notification message, as illustrated in step 408. The notification management client 106 transmits the open notification channel, as the notification management client 106 does not have any notification channel open with the notification management server 110. If the notification type is a PUSH method, the notification management client 106 requests the notification management server 110 to start a PUSH notification service with its specific protocol. Further, the create notification channel request and the open notification channel can be combined and sent as a single request.

The notification management client 106 indicates to the VAL client 104 the status of its request to receive notifications from the VAL server 108, as illustrated in step 410. The notification management client 106 also includes a callback URL, which needs to be used by the VAL client 104 while subscribing to the VAL server 108 for receiving notifications. In this procedure 400, the subscription for notification is handled by the VAL client 104 over the VAL-UU interface. The VAL client 104 transmits a subscription for notification request to the VAL server 108, as illustrated in step 412, containing details of VAL Client ID, VAL service ID and subscription data. The callback URL returned from the notification management server 110 in step 406 is included in the subscription for notification request for the VAL server 108 to use to send notification messages.

The VAL server 108 transmits a subscription for notification response to the VAL client 104, as illustrated in step 414, acknowledging the subscription. The VAL server 108 detects if an event matching the criteria specified in the stored subscription data has occurred (which is received in step 412), and generates a notification message, accordingly, as illustrated in step 416. The VAL server 108 sends the generated notification message to the notification management server 110, as illustrated in step 418, containing the VAL client ID, VAL service ID and the event data.

If the delivery method is PULL, the notification management server 110 sends the notification message to the notification management client 106, as illustrated in step 420, over an opened notification channel. If the delivery method is PUSH, the notification management server 110 sends the notification message to the PUSH Enabler server (not shown in the figure) to be delivered to the notification management client 106. The notification management client 106 delivers the received notification message to the appropriate VAL client 104, as illustrated in step 422, based on details as received in the notification message from the notification management server 110.

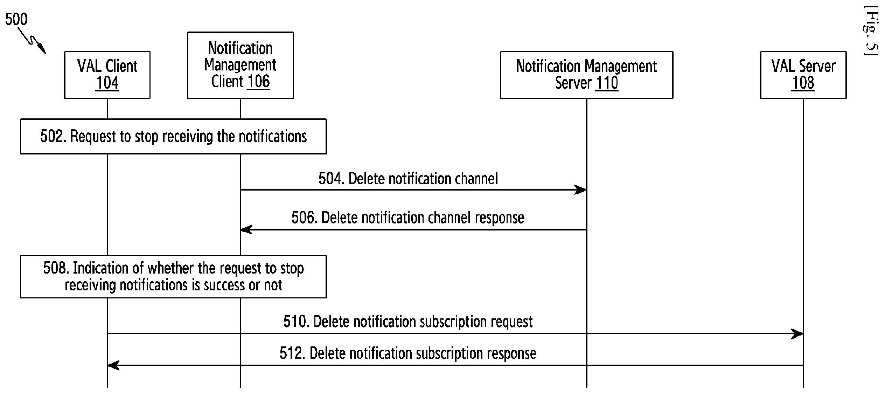

FIG. 5 illustrates a procedure 500 of how the notification management client 106 deletes a notification channel and the VAL client 104 deletes a subscription with the VAL server 108. As illustrated in step 502, the VAL client 104 decides to stop receiving notifications from the VAL server 108 and requests the notification management client 106. The notification management client 106 transmits the delete notification channel request to the notification management server 110, as illustrated in step 504, if the channel is currently being used only by this VAL client 104 or else transmits a delete VAL service to notification subscription request.

The notification management server 110 acknowledges the request and transmits the delete notification channel response to the notification management client 106, as illustrated in step 506. The notification management client 106 indicates to the VAL client 104 regarding the status of the request to stop receiving the notification, as illustrated in step 508. The VAL client 104 transmits the delete notification subscription request to the VAL server 108, as illustrated in step 510, to remove the corresponding subscription with the VAL server 108. The VAL server 108 transmits the delete notification subscription response to the VAL client 104 to acknowledge the subscription deletion request, as depicted in step 512. Further, the steps 504 and 510 can be performed in parallel.

In an embodiment herein, subscription for notification request can be managed by the notification management client 106 and the notification management server 110. Table 13 describes an information flow of a subscription for notification request from the notification management client 106 to the notification management server 110. The subscription for notification request can comprise, but not limited to identity, VAL service ID, VAL application ID, subscription data, validity, and callback URL.

**[Table 13]**

| **Information Element** | **Status** | **Description** |
|---|---|---|
| Identity | M | Identity of the requesting notification management client 106 |
| Identity | M | Identity of the VAL UE 102 or VAL user intending to receive notifications from the VAL server 108 |
| VAL service ID | M | Identity of the VAL service for which the notification management client 106 wants to receive notifications. |
| VAL application ID | M | Identity of the VAL application residing in the VAL UE 102 for which notification message to be delivered |
| Subscription Data | M | Details of the notification event type and data for which the VAL client 104 is subscribing for |
| Validity | M | How long the subscription to notification will last (i.e., subscription lifetime); this value shall be the returned value in the create notification channel response |
| Callback URL | M | The endpoint URL where to send the notification message |

Table 14 describes an information flow of a subscription for notification request from the notification management server 110 to the VAL server 108. The subscription for notification request can comprise, but not limited to identity, VAL service ID, VAL application ID, subscription data, and callback URL.

**[Table 14]**

| **Information Element** | **Status** | **Description** |
|---|---|---|
| Identity | M | Identity of the requesting notification management server 110 |
| Identity | M | Identity of the VAL client 104 intending to receive notifications from the VAL server 108 |
| VAL service ID | M | Identity of the VAL service for which the notification management server 110 wants to receive notifications |
| VAL application ID | M | Identity of the VAL application residing in the VAL UE 102 for which notification message to be delivered |
| Subscription Data | M | Details of the notification event type and data for which the VAL client 104 is subscribing for |
| Callback URL | M | The URL where to send the notification message |

Table 15 describes an information flow of a subscription for notification response from the notification management server 110 to the notification management client 106. The subscription for notification response can comprise, but not limited to identity, validity duration, and subscription result.

**[Table 15]**

| **Information Element** | **Status** | **Description** |
|---|---|---|
| Identity | M | Identity of the requested notification management client 106 |
| Validity duration | M | How long the subscription of notification will last (i.e., subscription lifetime) as granted by the notification management server 110 |
| Subscription Result | M | Indicates if the subscription is success or failure |

Table 16 describes an information flow of a subscription for notification response from the VAL server 108 to the notification management server 110. The subscription for notification response can comprise, but not limited to identity, validity duration, and subscription result.

**[Table 16]**

| **Information Element** | **Status** | **Description** |
|---|---|---|
| Identity | M | Identity of the requested notification management server 110 |
| Validity duration | M | How long the subscription of notification will last (i.e., subscription lifetime) as granted by the VAL server 108 |
| Result | M | Indicates if the subscription is success or failure |

Table 17 describes an information flow for a delete notification subscription request from the notification management client 106 to the notification management server 110. The delete notification subscription request can comprise, but not limited to identity, and subscription identity.

**[Table 17]**

| **Information Element** | **Status** | **Description** |
|---|---|---|
| Identity | M | Identity of the requesting notification management client 106 |
| Subscription identity | M | Identifies the subscription to be deleted |

Table 18 describes an information flow for a delete notification subscription request from the notification management server 110 to the VAL server 108. The delete notification subscription request can comprise, but not limited to identity, and subscription identity.

**[Table 18]**

| **Information Element** | **Status** | **Description** |
|---|---|---|
| Identity | M | Identity of the requesting notification management server 110 |
| Subscription Identity | M | Identifies the subscription to be deleted |

Table 19 describes an information flow for a delete notification subscription response from the VAL server 108 to the notification management server 110 to and from notification management server 110 to the notification management client 106. The delete notification subscription response can comprise result(s) for the request.

**[Table 19]**

| **Information Element** | **Status** | **Description** |
|---|---|---|
| Result | M | Indicates if the deletion of notification subscription is success or failure |

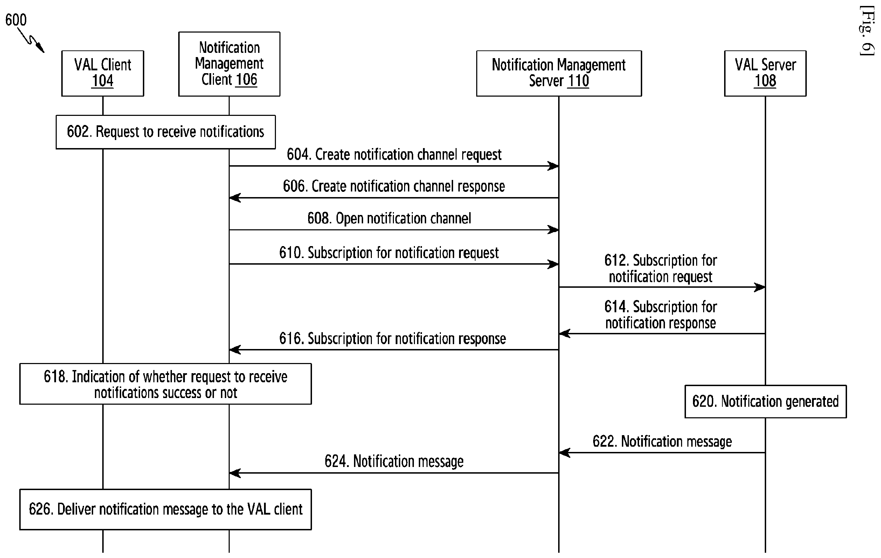

FIG. 6 illustrates a procedure 600 for receiving notifications from the notification management server 110 by the notification management client 106, where subscription is managed by the notification management client 106. The notification management client 106 does not have any notification channel open with the notification management server 110.

The VAL client 104 requests the notification management client 106 to subscribe to and receive notifications from the VAL server 108, as illustrated in step 602. The notification management client 106 creates notification channels (i.e., endpoint URLs), if not created already, to be used by the VAL server 108 to send notification messages. The notification management client 106 transmits a create notification channel request to the notification management server 110 to create a notification channel, as illustrated in step 604. The desired validity duration for the channels to be used and the notification channel type such as PUSH, or PULL are included in the request.

The notification management server 110 transmits to the notification management client 106, a create notification channel response, as illustrated in step 606, with the endpoint URLs that can be used by the VAL server 108 to send the notification messages and the notification management client 106 to receive the notification messages. The notification management server 110 also includes the valid duration for these endpoint URLs to be used in the create notification channel response. If the notification type is a PULL method, the notification management client 106 transmits an open notification channel, as illustrated in step 608, to the notification management server 110 to start receiving the notification message. For a PUSH method, the notification management client 106 requests the notification management server 110 to start the PUSH notification service with its specific protocol.

The notification management client 106 transmits a subscription for notification request, as illustrated in step 610, to the notification management server 110 containing the details of VAL client ID, VAL service ID and subscription data. The callback URL returned from the notification management server 110 in step 606 is included in the request for the VAL server 108 to use to send notification messages. The notification management server 110 transmits the subscription for notification request to the VAL server 108, as illustrated in step 612, containing the details of VAL client ID, VAL service ID, callback URL and subscription data as received in step 610. The VAL server 108 transmits a subscription for notification response, as illustrated in step 614, to the notification management server 110 to acknowledge the request. The notification management server 110 transmits the subscription for notification response, as illustrated in step 616, to the notification management client 106 to acknowledge the request.

The notification management client 106 indicates to the VAL client 104 the status of its request to subscribe and receive notifications from the VAL server 108, as illustrated in step 618. The VAL server 108 detects the event occurred matching the criteria specified in the stored subscription data (which is received in step 612) and generates a notification message, as illustrated in step 620. The VAL server 108 sends the notification message to the notification management server 110, as illustrated in step 622, containing the VAL client ID, VAL service ID and the event data.

If the delivery method is PULL, the notification management server 110 sends the notification message to the notification management client 106, as illustrated in step 624, over an opened notification channel. If the delivery method is PUSH, the notification management server 110 sends the notification message to the PUSH Enabler server (not shown in the figure) to deliver to the notification management client 106. The notification management client 106 delivers the received notification message to the appropriate VAL client 104, as illustrated in step 626, based on the details as received in the notification message from the notification management server 110.

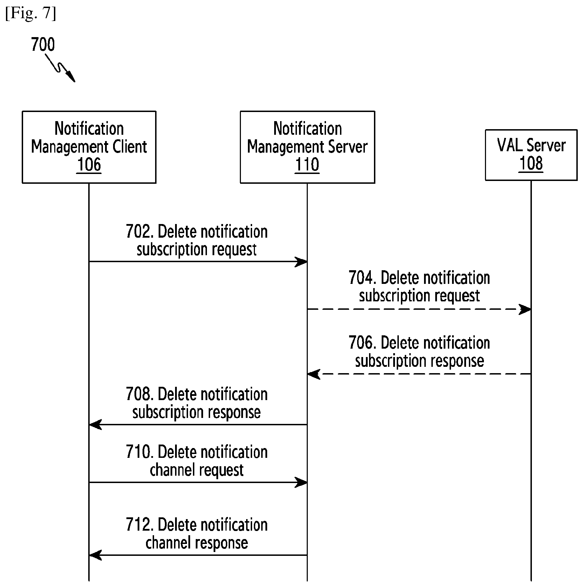

FIG. 7 illustrates a procedure 700 of how the notification management client 106 deletes a notification channel and subscription that is no longer needed. The notification channel has already been requested and established between the notification management client 106 and the notification management server 110. The notification management client 106 has a successful notification subscription with the notification management server 110. In this scenario, there are no more VAL clients willing to receive notifications from the VAL server 108 and the notification channel is being un-used. The notification management client 106 decides to delete the subscription with the notification management server 110 and transmits the delete notification subscription request to the notification management server 110, as illustrated in step 702. The notification management server 110 transmits the delete notification subscription request to the corresponding VAL server 108, as illustrated in step 704, if the subscription is not being used for other notification management clients.

The VAL server 108 transmits the delete notification subscription response to the notification management server 110, as illustrated in step 706. The notification management server 110 transmits the delete notification subscription response to the notification management client 106, as illustrated in step 708. The notification management client 106 decides to close the notification channel and transmits the delete notification channel request to the notification management server 110, as illustrated in step 710. The notification management server 110 transmits the delete notification channel response to the notification management client 106, as illustrated in step 712.

In an embodiment herein, the notifications can be received by reusing existing notification channels that can be obtained through adding VAL service to notification subscription request. Table 20 describes an information flow for an add VAL service to notification subscription request from the notification management client 106 to the notification management server 110. The add VAL service to notification subscription request can comprise, but not limited to, identity, VAL service ID, subscription identity, VAL application ID, and subscription data.

**[Table 20]**

| **Information Element** | **Status** | **Description** |
|---|---|---|
| Identity | M | Identity of the requested notification management client 106 |
| VAL service ID | O | Identity of the VAL service which needs to be added to the existing subscription for receiving notifications |
| Identity | O | Identity of the VAL client 104 requesting to receive notifications |
| Subscription Identity | M | Identifies the subscription |
| VAL application ID | M | Identity of the VAL application residing in the VAL UE 102 for which notification message to be delivered |
| Subscription Data | M | Details of the notification event type and data for which the VAL client 104 is subscribing for |

Table 21 describes an information flow for an add VAL service to notification subscription request from the notification management server 110 to the VAL server 108. The add VAL service to notification subscription request can comprise, but not limited to, identity, subscription identity, VAL application ID, and subscription data.

**[Table 21]**

| **Information Element** | **Status** | **Description** |
|---|---|---|
| Identity | M | Identity of the requested notification management server 110 |
| Identity | M | Identity of the VAL client 104 requesting to receive notifications |
| Subscription Identity | M | Identifies the subscription |
| VAL application ID | M | Identity of the VAL application residing in the VAL UE 102 for which notification message to be delivered |
| Subscription Data | M | Details of the notification event type and data for which the VAL client 104 is subscribing for |

Table 22 describes an information flow for an add VAL service to notification subscription response from the notification management server 110 to the notification management client 106. The add VAL service to notification subscription response can comprise, but not limited to, identity, and result(s) for the request.

**[Table 22]**

| **Information Element** | **Status** | **Description** |
|---|---|---|
| Identity | M | Identity of the requested notification management client 106 |
| Result | M | Indicates if the request is success or failure |

Table 23 describes an information flow for an add VAL service to notification subscription response from the VAL server 108 to the notification management server 110. The add VAL service to notification subscription response can comprise, but not limited to, identity, and result(s) for the request.

**[Table 23]**

| **Information Element** | **Status** | **Description** |
|---|---|---|
| Identity | M | Identity of the requested notification management server 110 |
| Identity | M | Identity of the VAL client 104 requesting to receive notifications |
| Result | M | Indicates if the subscription is success or failure |

Table 24 describes an information flow for a delete VAL service from notification subscription request from the notification management client 106 to the notification management server 110. The delete VAL service from notification subscription request can comprise, but not limited to, identity, VAL service ID, subscription identity, VAL application ID and subscription data.

**[Table 24]**

| **Information Element** | **Status** | **Description** |
|---|---|---|
| Identity | M | Identity of the requested notification management client 106 |
| VAL service ID | O | Identity of the VAL service which needs to be removed from the existing subscription for receiving notifications |
| Identity | O | Identity of the VAL client 104 requesting to stop receiving notifications |
| Subscription identity | M | Identifies the subscription |
| VAL application ID | M | Identity of the VAL application residing in the VAL UE 102 for which notification message to be delivered |
| Subscription data (See NOTE) | O | Details of the notification event type and data for which the VAL client 104 is requesting to stop receiving notification |
| NOTE : If this IE is not present then all the subscription data which the VAL client 104 has subscribed for will be deleted | | |

Table 25 describes an information flow for a delete VAL service from notification subscription request from the notification management server 110 to the VAL server 108. The delete VAL service from notification subscription request can comprise, but not limited to, identity, and subscription identity.

**[Table 25]**

| **Information Element** | **Status** | **Description** |
|---|---|---|
| Identity | M | Identity of the requested notification management server 110 |
| Identity | M | Identity of the VAL client 104 requesting to stop receiving notifications |
| Subscription identity | M | Identifies the subscription |

Table 26 describes an information flow for a delete VAL service from notification subscription response from the notification management server 110 to the notification management client 106. The delete VAL service from notification subscription response can comprise, but not limited to, identity, and result(s) for the request.

**[Table 26]**

| **Information Element** | **Status** | **Description** |
|---|---|---|
| Identity | M | Identity of the requested notification management client 106 |
| Result | M | Indicates if the request is success or failure |

Table 27 describes an information flow for a delete VAL service from notification subscription response from the VAL server 108 to the notification management server 110. The delete VAL service from notification subscription response can comprise, but not limited to, identity, and result(s) for the request.

**[Table 27]**

| **Information Element** | **Status** | **Description** |
|---|---|---|
| Identity | M | Identity of the requested notification management server 110 |
| Result | M | Indicates if the request is success or failure |

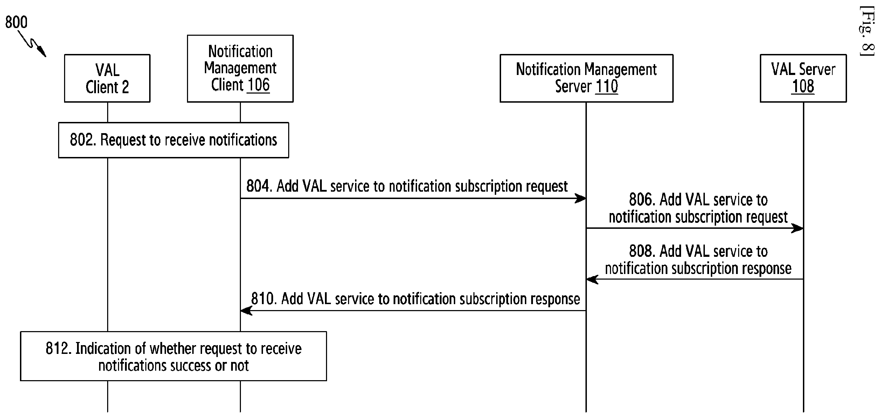

FIG. 8 illustrates a procedure 800 for receiving notifications from the notification management server 110 by the notification management client 106 by reusing the existing notification channel. In a scenario, where the notification management client 106 already has a notification channel opened with the notification management server 110, for example, based on the request from a VAL client 1 existing on VAL UE 102 for a VAL service 1, the notification management client 106 decides to use the same channel for receiving notification messages for multiple VAL clients 104 residing on the VAL UE 102.

The VAL client 104 requests the notification management client 106 to subscribe to and receive notifications, as illustrated in step 802, from the VAL server 108. The notification management client 106 decides to use the existing notification channel subscription for this VAL client's request and transmits the add VAL service to notification subscription request to the notification management server 110, as illustrated in step 804. This request contains the VAL client ID, VAL service ID and the details of the subscription data. The notification management server 110 transmits the add VAL service to notification subscription request to the VAL server 108, as illustrated in step 806, if there is already an active subscription with the VAL server 108 and if the notification management server 110 decides to reuse the same. If no active subscription is present, the notification management server 110 transmits a subscription for notification request to create the **subscription. Decision of whether to reuse the existing subscription** by the notification **management client 106 and the notification management** server 110 is implementation specific.

The VAL server 108 transmits the add VAL service to notification subscription response, as illustrated in step 808, to the notification management server 110. The notification management server 110 transmits the add VAL service to notification subscription response to the notification management client 106, as illustrated in step 810. The notification management client 106 indicates to the VAL client 104, the status of its request to receive notifications from the VAL server 108, as illustrated in step 812.

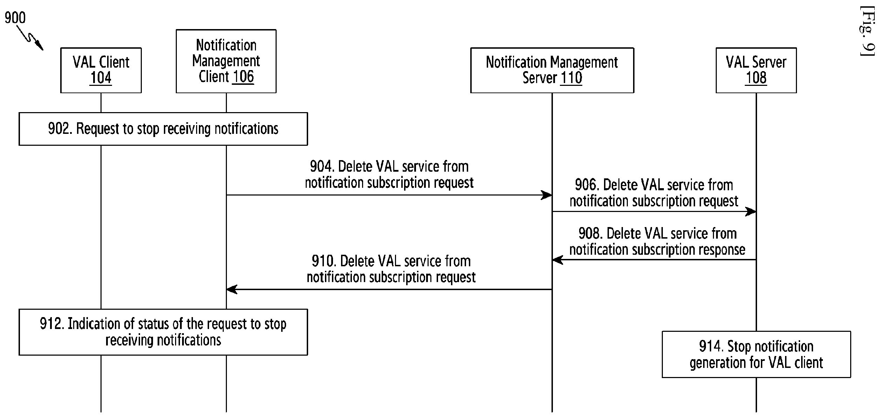

FIG. 9 illustrates a procedure 900 to stop receiving notifications from the notification management server 110 by the notification management client 106. In this scenario, the notification management is reusing the same channel for multiple VAL clients 104 to receive notifications. For example, the notification management client 106 has created the notification channel and using the same channel for serving more than one VAL clients 104. The notification management server 110 maintains the same notification subscription with VAL server 108 for multiple VAL clients 104 of the same VAL service.

The VAL client 104 requests the notification management client 106 to stop subscription to receive notifications from the VAL server 108, as illustrated in step 902. The notification management client 106 checks if the notification channel subscription is being used for any other VAL clients. If it is being used for other VAL clients, the notification management client 106 transmits the delete VAL service from notification subscription request to the notification management server 110, as illustrated in step 904, to remove the subscription data related to the VAL client 104. If not being used for other VAL clients, the notification management client 106 transmits a delete notification subscription request.

The notification management server 110 on receiving the delete VAL service from notification subscription request checks if the subscription with VAL server 108 for receiving notifications is exclusive for this notification management client 106 or it is being used for other notification management clients also. If it is being used for other notification management clients, the notification management server 110 transmits the delete VAL service from notification subscription request, as illustrated in step 906, to the VAL server 108. If not, the notification management server 110 sends the delete notification subscription request to the VAL server 108.

The VAL server 108 removes the VAL client 104 and its subscription data from the existing subscription and transmits a delete VAL service from notification subscription response, as illustrated in step 908, to the notification management server 110. The notification management server 110 removes the VAL client 104 and its subscription data from the existing notification subscription with the notification management client 106 and transmits the delete VAL service from notification subscription response to the notification management client 106, as illustrated in step 910. The notification management client 106 indicates to the VAL client 104, the status of its request to stop subscription to receive notifications from the VAL server 108, as illustrated in step 912. The VAL server 108 stops generating notifications for this VAL client 104, as illustrated in step 914.

In an embodiment herein, an add VAL service to notification subscription request, a delete VAL service to the notification subscription request, and a request to update the validity duration of the subscription request can be combined as a single request which carries all the required information elements.

In an embodiment herein, the notification management client 106 can modify the existing subscription data. Table 28 describes an information flow for a modify subscribe for notification request from the notification management client 106 to the notification management server 110. The modify subscribe for notification request can comprise, but not limited to identity, VAL service ID, VAL application ID, subscription identity, and subscription data.

**[Table 28]**

| **Information Element** | **Status** | **Description** |
|---|---|---|
| Identity | M | Identity of the requesting notification management client 106 |
| Identity | M | Identity of the VAL client 104 intending to receive notifications from the VAL server 108 |
| VAL service ID | M | Identity of the VAL service for which the notification management client 106 wants to receive notifications |
| VAL application ID | M | Identity of the VAL application residing in the VAL UE 102 for which notification message to be delivered |
| Subscription Identity | M | Identity of the subscription |
| Subscription Data | M | Carries the details of the existing notification event type which needs to be modified and the modified data |

Table 29 describes an information flow for a modify subscribe for notification request from the notification management server 110 to the VAL server 108. The modify subscribe for notification request can comprise, but not limited to identity, VAL service ID, VAL application ID, subscription identity, and subscription data.

**[Table 29]**

| **Information Element** | **Status** | **Description** |
|---|---|---|
| Identity | M | Identity of the requesting notification management server 110 |
| Identity | M | Identity of the VAL client 104 intending to receive notifications from the VAL server 108 |
| VAL service ID | M | Identity of the VAL service for which the notification management server 110 wants to receive notifications |
| VAL application ID | M | Identity of the VAL application residing in the VAL UE 102 for which notification message to be delivered |
| Subscription Identity | M | Identity of the subscription |
| Subscription Data | M | Carries the details of the existing notification event type which needs to be modified and the modified data |

Table 30 describes an information flow for a modify subscribe for notification response from the notification management server 110 to the notification management client 106. The modify subscribe for notification response can comprise result(s) for the request.

**[Table 30]**

| **Information Element** | **Status** | **Description** |
|---|---|---|
| Result | M | Indicates if the modification of subscription is success or failure |

Table 31 describes an information flow for a modify subscribe for notification response from the VAL server 108 to the notification management server 110. The modify subscribe for notification response can comprise result(s) for the request.

**[Table 31]**

| **Information Element** | **Status** | **Description** |
|---|---|---|
| Result | M | Indicates if the modification of subscription is success or failure |

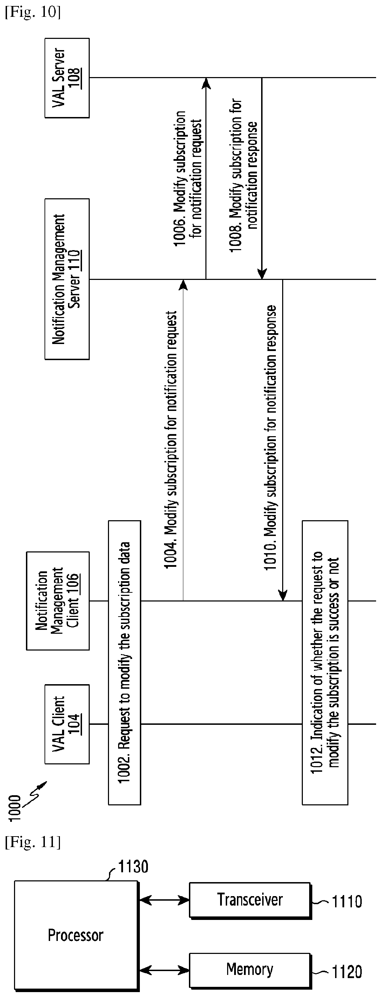

FIG. 10 illustrates a procedure 1000 to modify the existing subscription data by the notification management client 106 based on the request from the VAL client 104. In this scenario, the notification management client 106 already has a notification channel opened with the notification management server 110 based on the request from the VAL client 104. The notification management client 106 has a successful notification subscription with the notification management server 110. The VAL client 104 decides to modify the existing subscription data.

The VAL client 104 requests the notification management client 106 to modify the subscription data, as illustrated in step 1002, and shares details accordingly. The notification management client 106 identifies the corresponding subscription and transmits a modify subscription for notification request to the notification management server 110, as illustrated in step 1004. This request contains the VAL client ID, VAL service ID, subscription identify and the modified subscription data. The notification management server 110 transmits the modify subscribe for notification request to the corresponding VAL server 108, as illustrated in step 1006.

The VAL server 108 transmits the modify subscription for notification response to the notification management server 110, as illustrated in step 1008. The notification management server 110 transmits the modify subscription for notification response to the notification management client 106, as illustrated in step 1010. The notification management client 106 sends the indication of whether the request to modify the subscription is success or not, as illustrated in step 1012, to the VAL client 104.

The proposed framework can be used by other SEAL services which require notification mechanism. The SEAL service framework is utilized for managing subscription and notification service. This framework offloads the complexity of subscription and notification logic from the vertical enabler. The proposed system 100 enables the notification management client 106 to re-use the same channel for serving multiple VAL clients 104 residing on the VAL UE 102. The system 100 enables the notification management server 110 to re-use the subscription with the VAL server 108 for serving more than one VAL clients 104 of the same VAL service.

The system 100 proposes information flows and procedures for reusing the same channel and subscription between the notification management client 106 and the notification management server 110 for serving multiple VAL clients 104 residing on the VAL UE 102. The proposed information flows and procedures can be utilized between the notification management server 110 and the VAL server 108 to re-use the subscription for serving multiple VAL clients 104 of the same VAL service. The system 100 provides flexibility to create multiple channels and subscriptions by the notification management client 106 and the notification management server 110 based on load conditions.

Thus, the notification management is proposed as another common service which can be used by multiple verticals and proposes required functional model, information flows and procedures for enabling notification management service as a SEAL service.

The embodiments disclosed herein can be implemented through at least one software program running on at least one hardware device and performing network management functions to control the network elements. The modules shown in Fig. 2 include blocks which can be at least one of a hardware device, or a combination of hardware device and software module.

FIG. 11 illustrates a block diagram of a terminal (or a user equipment (UE)), according to embodiments of the present disclosure. FIG. 11 corresponds to the example of the UE of FIG. 1.

As shown in FIG. 11, the UE according to an embodiment may include a transceiver 1110, a memory 1120, and a processor 1130. The transceiver 1110, the memory 1120, and the processor 1130 of the UE may operate according to a communication method of the UE described above. However, the components of the UE are not limited thereto. For example, the UE may include more or fewer components than those described above. In addition, the processor 1130, the transceiver 1110, and the memory 1120 may be implemented as a single chip. Also, the processor 1130 may include at least one processor.

The transceiver 1110 collectively refers to a UE receiver and a UE transmitter, and may transmit/receive a signal to/from a base station or a network entity. The signal transmitted or received to or from the base station or a network entity may include control information and data. The transceiver 1110 may include a RF transmitter for up-converting and amplifying a frequency of a transmitted signal, and a RF receiver for amplifying low-noise and down-converting a frequency of a received signal. However, this is only an example of the transceiver 1110 and components of the transceiver 1110 are not limited to the RF transmitter and the RF receiver.

Also, the transceiver 1110 may receive and output, to the processor 1130, a signal through a wireless channel, and transmit a signal output from the processor 1130 through the wireless channel.

The memory 1120 may store a program and data required for operations of the UE. Also, the memory 1120 may store control information or data included in a signal obtained by the UE. The memory 1120 may be a storage medium, such as read-only memory (ROM), random access memory (RAM), a hard disk, a CD-ROM, and a DVD, or a combination of storage media.

The processor 1130 may control a series of processes such that the UE operates as described above. For example, the transceiver 1110 may receive a data signal including a control signal transmitted by the base station or the network entity, and the processor 1130 may determine a result of receiving the control signal and the data signal transmitted by the base station or the network entity.

In the afore-described embodiments of the present disclosure, elements included in the present disclosure are expressed in a singular or plural form according to the embodiments. However, the singular or plural form is appropriately selected for convenience of explanation and the present disclosure is not limited thereto. As such, an element expressed in a plural form may also be configured as a single element, and an element expressed in a singular form may also be configured as plural elements.

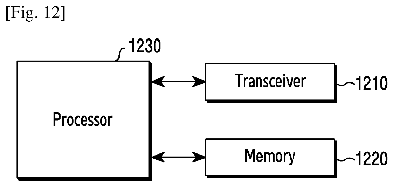

FIG. 12 illustrates a block diagram showing an internal structure of a network entity, according to an embodiment of the present disclosure. Furthermore, the network entity corresponds to communication network of FIG. 1.

As shown in FIG. 12, the network entity of the present disclosure may include a transceiver 1210, a memory 1220, and a processor 1230. The transceiver 1210, the memory 1220, and the processor 1230 of the network entity may operate according to a communication method of the network entity described above. However, the components of the terminal are not limited thereto. For example, the network entity may include more or fewer components than those described above. In addition, the processor 1230, the transceiver 1210, and the memory 1220 may be implemented as a single chip. Also, the processor 1230 may include at least one processor.

The transceiver 1210 collectively refers to a network entity receiver and a network entity transmitter, and may transmit/receive a signal to/from a base station or a UE. The signal transmitted or received to or from the base station or the UE may include control information and data. In this regard, the transceiver 1210 may include a RF transmitter for up-converting and amplifying a frequency of a transmitted signal, and a RF receiver for amplifying low-noise and down-converting a frequency of a received signal. However, this is only an example of the transceiver 1210 and components of the transceiver 1210 are not limited to the RF transmitter and the RF receiver.

Also, the transceiver 1210 may receive and output, to the processor 1230, a signal through a wireless channel, and transmit a signal output from the processor 1230 through the wireless channel.

The memory 1220 may store a program and data required for operations of the network entity. Also, the memory 1220 may store control information or data included in a signal obtained by the network entity. The memory 1220 may be a storage medium, such as ROM, RAM, a hard disk, a CD-ROM, and a DVD, or a combination of storage media.

The processor 1230 may control a series of processes such that the network entity operates as described above. For example, the transceiver 1210 may receive a data signal including a control signal, and the processor 1230 may determine a result of receiving the data signal.

## Claims

1. A method performed by a notification management client in a wireless communication system, the method comprising:
receiving, from a vertical application layer, VAL, client, a notification management request message to receive a notification from a VAL server (402);
transmitting, to a notification management server, a create notification channel request message for a notification channe (404);
receiving, from the notification management server, a create notification channel response message (404) including a callback uniform resource locator, URL;
transmitting, to the notification management server, an open notification channel message (408) to start receiving a notification message based on the create notification channel response message;
transmitting, to the VAL client, a notification management response message including an indication of status of success or failure to start receiving the notification and the callback URL (410);
receiving, from the notification management server, a notification message (420) including a VAL client ID and a VAL service ID; and
transmitting, to the VAL client, the notification message (422),
wherein the callback URL is associated with an endpoint for receiving the notification message from the VAL server.

2. The method of claim 1,
wherein the create notification channel request message includes a desired validity duration of the notification channel and a notification channel type, and
wherein a type of notification channel is one of PUSH or PULL.

3. The method of claim 1, further comprising:
transmitting, to the notification management server, request to start a PUSH notification service in case that a notification type is a PUSH method.

4. The method of claim 1, further comprising:
receiving, from the VAL client, stop receiving notification management request message to stop receiving notification from the VAL server;
transmitting, to the notification management server, delete notification channel request message for deleting the notification channel;
receiving, from the notification management server, delete notification channel response message; and
transmitting, to the VAL client, an indication of status of the stop receiving notification management request,
wherein the indication of status of the stop receiving notification management request indicates success or failure of deletion of the at least one notification channel.

5. A method performed by a notification management server in a wireless communication system, the method comprising:
receiving, from a notification management client, a create notification channel request message (404) for a notification channel based on a notification management request message;
transmitting, to the notification management client, a create notification channel response message (406) including a callback uniform resource locator, URL;
receiving, from the notification management client, an open notification channel message (408) to start receiving a notification message based on the create notification channel response message;
receiving, from the VAL server, a notification message (420) including a VAL client ID and VAL service ID, generated from the VAL server; and
transmitting, to the notification management client, the notification message (422)
wherein the callback URL is associated with an endpoint for receiving the notification message from the VAL server.

6. The method of claim 5,
wherein the create notification channel request message includes a desired validity duration of the notification channel and a notification channel type,
wherein a type of notification channel is one of PUSH or PULL.

7. The method of claim 5, further comprising:
receiving, from the notification management client, request to start a PUSH notification service in case that a notification type is a PUSH method.

8. The method of claim 5, further comprising:
receiving, from the notification management client, delete notification channel request message for deleting the notification channel based on stop receiving notification management request message; and
transmitting, to the notification management client, delete notification channel response message.

9. A notification management client in a wireless communication system, the notification management client of the notification management client comprising:
a transceiver, and
a controller coupled with the transceiver and configured to:
receive, by a notification management client from a vertical application layer, VAL, client, a notification management request message to receive a notification from a VAL server,
transmit, to a notification management server, a create notification channel request message for a notification channel,
receive, from the notification management server, a create notification channel response message including a callback uniform resource locator, URL,
transmit, to the notification management server, an open notification channel message to start receiving a notification message based on the create notification channel response message,
transmit, to the VAL client, a notification management response message including an indication of status of success or failure to start receiving the notification and the callback URL,
receive, from the notification management server, a notification message including a VAL client ID and a VAL service ID, and
transmit, to the VAL client, the notification message,
wherein the callback URL is associated with an endpoint for receiving the notification message from the VAL server.

10. The notification management client of claim 9, wherein the controller is further configured to:
wherein the create notification channel request message includes a desired validity duration of the notification channel and a notification channel type, and
wherein a type of notification channel is one of PUSH or PULL.

11. The notification management client of claim 9, wherein the controller is further configured to:
transmit, to the notification management server, request to start a PUSH notification service in case that a notification type is a PUSH method.

12. The notification management client of claim 9, wherein the controller is further configured to:
receive, from the VAL client, stop receiving notification management request message to stop receiving notification from the VAL server,
transmit, to the notification management server, delete notification channel request message for deleting the notification channel,
receive, from the notification management server, delete notification channel response message, and
transmit, to the VAL client, an indication of status of the stop receiving notification management request,
wherein the indication of status of the stop receiving notification management request indicates success or failure of deletion of the at least one notification channel.

13. A notification management server in a wireless communication system, the server comprising:
a transceiver, and
a controller coupled with the transceiver and configured to:
receive, from a notification management client, a create notification channel request message for a notification channel based on a notification management request message,
transmit, to the notification management client, a create notification channel response message including a callback uniform resource locator, URL,
receive, from the notification management client, an open notification channel message to start receiving a notification message based on the create notification channel response message,
receive, from the VAL server, a notification message including a VAL client ID and VAL service ID, generated from the VAL server, and
transmit, to the notification management client, the notification message,
wherein the callback URL is associated with an endpoint for receiving the notification message from the VAL server.

14. The server of claim 13,
wherein the create notification channel request message includes a desired validity duration of the notification channel and a notification channel type,
wherein a type of notification channel is one of PUSH or PULL.

15. The server of claim 13,
wherein the controller is further configured to:
receive, from the notification management client, request to start a PUSH notification service in case that a notification type is a PUSH method.

## Patentansprüche

1. Verfahren, das von einem Benachrichtigungsverwaltungs-Client in einem drahtlosen Kommunikationssystem durchgeführt wird, wobei das Verfahren Folgendes umfasst:
Empfangen einer Benachrichtigungsverwaltungs-Anforderungsnachricht von einem Vertical Application Layer-, VAL, -Client, um eine Benachrichtigung von einem VAL-Server (402) zu empfangen;
Senden einer Anforderungsnachricht zum Erstellen eines Benachrichtigungskanals für einen Benachrichtigungskanal (404) an einen Benachrichtigungsverwaltungs-Server;
Empfangen einer Antwortnachricht zum Erstellen eines Benachrichtigungskanals (404) vom Benachrichtigungsverwaltungs-Server, die einen Rückruf-Uniform Resource Locator, URL, enthält;
Senden einer Nachricht zum Öffnen eines Benachrichtigungskanals (408) an den Benachrichtigungsverwaltungs-Server, um den Empfang einer Benachrichtigungsnachricht auf der Grundlage der Antwortnachricht zum Erstellen eines Benachrichtigungskanals zu starten;
Senden einer Benachrichtigungsverwaltungs-Antwortnachricht an den VAL-Client, die eine Statusangabe zum Erfolg oder Misserfolg des Starts des Empfangs der Benachrichtigung sowie den Rückruf-URL enthält (410);
Empfangen einer Benachrichtigungsnachricht (420) vom Benachrichtigungsverwaltungs-Server, die eine VAL-Client-ID und eine VAL-Dienst-ID enthält; und
Senden der Benachrichtigungsnachricht (422) an den VAL-Client,
wobei der Rückruf-URL mit einem Endpunkt für den Empfang der Benachrichtigungsnachricht vom VAL-Server assoziiert ist.

2. Verfahren nach Anspruch 1,
wobei die Anforderungsnachricht zum Erstellen eines Benachrichtigungskanals eine gewünschte Gültigkeitsdauer des Benachrichtigungskanals und einen Benachrichtigungskanaltyp enthält, und
wobei ein Typ des Benachrichtigungskanals eines von PUSH und PULL ist.

3. Verfahren nach Anspruch 1, umfassend ferner:
Senden einer Anforderung zum Starten eines PUSH-Benachrichtigungsdienstes an den Benachrichtigungsverwaltungs-Server, falls ein Benachrichtigungstyp eine PUSH-Methode ist.

4. Verfahren nach Anspruch 1, umfassend ferner:
Empfangen einer Benachrichtigungsverwaltungs-Anforderungsnachricht zum Stoppen des Empfangs vom VAL-Client, um den Empfang von Benachrichtigungen vom VAL-Server zu stoppen;
Senden einer Anforderungsnachricht zum Löschen des Benachrichtigungskanals an den Benachrichtigungsverwaltungs-Server, um den Benachrichtigungskanal zu löschen;
Empfangen einer Antwortnachricht zum Löschen des Benachrichtigungskanals vom Benachrichtigungsverwaltungs-Server; und
Senden einer Statusangabe der Benachrichtigungsverwaltungs-Anforderung zum Stoppen des Empfangs an den VAL-Client,
wobei die Statusangabe der Benachrichtigungsverwaltungs-Anforderung zum Stoppen des Empfangs den Erfolg oder Misserfolg des Löschens des mindestens einen Benachrichtigungskanals angibt.

5. Verfahren, das von einem Benachrichtigungsverwaltungs-Server in einem drahtlosen Kommunikationssystem durchgeführt wird, wobei das Verfahren Folgendes umfasst:
Empfangen einer Anforderungsnachricht zum Erstellen eines Benachrichtigungskanals (404) für einen Benachrichtigungskanal auf der Grundlage einer Benachrichtigungsverwaltungs-Anforderungsnachricht von einem Benachrichtigungsverwaltungs-Client;
Senden einer Antwortnachricht zum Erstellen eines Benachrichtigungskanals (406), die einen Rückruf-Uniform Resource Locator, URL, enthält, an den Benachrichtigungsverwaltungs-Client;
Empfangen einer Nachricht zum Öffnen eines Benachrichtigungskanals (408) vom Benachrichtigungsverwaltungs-Client, um den Empfang einer Benachrichtigungsnachricht auf der Grundlage der Antwortnachricht zum Erstellen eines Benachrichtigungskanals zu starten;
Empfangen einer Benachrichtigungsnachricht (420) vom VAL-Server, die eine VAL-Client-ID und eine VAL-Service-ID, die vom VAL-Server erzeugt werden, enthält; und
Senden der Benachrichtigungsnachricht (422) an den Benachrichtigungsverwaltungs-Client,
wobei der Rückruf-URL mit einem Endpunkt für den Empfang der Benachrichtigungsnachricht vom VAL-Server assoziiert ist.

6. Verfahren nach Anspruch 5,
wobei die Anforderungsnachricht zum Erstellen eines Benachrichtigungskanals eine gewünschte Gültigkeitsdauer des Benachrichtigungskanals und einen Benachrichtigungskanaltyp enthält,
wobei ein Typ des Benachrichtigungskanals eines von PUSH und PULL ist.

7. Verfahren nach Anspruch 5, umfassend ferner:
Empfangen einer Anforderung zum Starten eines PUSH-Benachrichtigungsdienstes vom Benachrichtigungsverwaltungs-Client für den Fall, dass ein Benachrichtigungstyp eine PUSH-Methode ist.

8. Verfahren nach Anspruch 5, umfassend ferner:
Empfangen einer Anforderungsnachricht zum Löschen des Benachrichtigungskanals vom Benachrichtigungsverwaltungs-Client, um den Benachrichtigungskanal auf der Grundlage einer Benachrichtigungsverwaltungs-Anforderungsnachricht zum Stoppen des Empfangs zu löschen; und
Senden einer Antwortnachricht zum Löschen des Benachrichtigungskanals an den Benachrichtigungsverwaltungs-Client.

9. Benachrichtigungsverwaltungs-Client in einem drahtlosen Kommunikationssystem, wobei der Benachrichtigungsverwaltungs-Client Folgendes umfasst:
einen Transceiver und
eine Steuerung, die mit dem Transceiver gekoppelt und dazu konfiguriert ist,
über einen Benachrichtigungsverwaltungs-Client von einem Vertical Application Layer-, VAL, -Client eine Benachrichtigungsverwaltungs-Anforderungsnachricht zu empfangen, um eine Benachrichtigung von einem VAL-Server zu empfangen,
eine Anforderungsnachricht zum Erstellen eines Benachrichtigungskanals für einen Benachrichtigungskanal an einen Benachrichtigungsverwaltungs-Server zu senden,
vom Benachrichtigungsverwaltungs-Server eine Antwortnachricht zum Erstellen eines Benachrichtigungskanals, die einen Rückruf-Uniform Resource Locator, URL, enthält, zu empfangen,
eine Nachricht zum Öffnen eines Benachrichtigungskanals an den Benachrichtigungsverwaltungs-Server zu senden, um den Empfang einer Benachrichtigungsnachricht auf der Grundlage der Antwortnachricht zum Erstellen eines Benachrichtigungskanals zu starten,
eine Benachrichtigungsverwaltungs-Antwortnachricht, die eine Statusangabe zum Erfolg oder Misserfolg des Starts des Empfangs der Benachrichtigung sowie den Rückruf-URL enthält, an den VAL-Client zu senden,
vom Benachrichtigungsverwaltungs-Server eine Benachrichtigungsnachricht, die eine VAL-Client-ID und eine VAL-Dienst-ID enthält, zu empfangen, und
die Benachrichtigungsnachricht an den VAL-Client zu senden,
wobei der Rückruf-URL mit einem Endpunkt für den Empfang der Benachrichtigungsnachricht vom VAL-Server assoziiert ist.

10. Benachrichtigungsverwaltungs-Client nach Anspruch 9, wobei die Steuerung ferner so konfiguriert ist,
wobei die Anforderungsnachricht zum Erstellen eines Benachrichtigungskanals eine gewünschte Gültigkeitsdauer des Benachrichtigungskanals und einen Benachrichtigungskanaltyp enthält, und
wobei ein Typ des Benachrichtigungskanals eines von PUSH und PULL ist.

11. Benachrichtigungsverwaltungs-Client nach Anspruch 9, wobei die Steuerung ferner dazu konfiguriert ist,
eine Anforderung zum Starten eines PUSH-Benachrichtigungsdienstes an den Benachrichtigungsverwaltungs-Server zu senden, falls ein Benachrichtigungstyp eine PUSH-Methode ist.

12. Benachrichtigungsverwaltungs-Client nach Anspruch 9, wobei die Steuerung ferner dazu konfiguriert ist,
vom VAL-Client eine Benachrichtigungsverwaltungs-Anforderungsnachricht zum Stoppen des Empfangs zu empfangen, um den Empfang von Benachrichtigungen vom VAL-Server zu stoppen,
eine Anforderungsnachricht zum Löschen des Benachrichtigungskanals an den Benachrichtigungsverwaltungs-Server zu senden, um den Benachrichtigungskanal zu löschen,
vom Benachrichtigungsverwaltungs-Server eine Antwortnachricht zum Löschen des Benachrichtigungskanals zu empfangen und
eine Statusangabe der Benachrichtigungsverwaltungs-Anforderung zum Stoppen des Empfangs an den VAL-Client zu senden,
wobei die Statusangabe der Benachrichtigungsverwaltungs-Anforderung zum Stoppen des Empfangs den Erfolg oder Misserfolg des Löschens des mindestens einen Benachrichtigungskanals angibt.

13. Benachrichtigungsverwaltungs-Server in einem drahtlosen Kommunikationssystem, wobei der Server Folgendes umfasst:
einen Transceiver und
eine Steuerung, die mit dem Transceiver gekoppelt und dazu konfiguriert ist,
von einem Benachrichtigungsverwaltungs-Client eine Anforderungsnachricht zum Erstellen eines Benachrichtigungskanals auf der Grundlage einer Benachrichtigungsverwaltungs-Anforderungsnachricht zu empfangen,
eine Antwortnachricht zum Erstellen eines Benachrichtigungskanals, die einen Rückruf-Uniform Resource Locator, URL, enthält, an den Benachrichtigungsverwaltungs-Client zu senden,
von dem Benachrichtigungsverwaltungs-Client eine Nachricht zum Öffnen eines Benachrichtigungskanals zu empfangen, um den Empfang einer Benachrichtigungsnachricht auf der Grundlage der Antwortnachricht zum Erstellen eines Benachrichtigungskanals zu starten,
vom VAL-Server eine Benachrichtigungsnachricht zu empfangen, die eine VAL-Client-ID und VAL-Dienst-ID, die vom VAL-Server erzeugt werden, enthält, und
die Benachrichtigungsnachricht an den Benachrichtigungsverwaltungs-Client zu senden,
wobei der Rückruf-URL mit einem Endpunkt für den Empfang der Benachrichtigungsnachricht vom VAL-Server assoziiert ist.

14. Server nach Anspruch 13,
wobei die Anforderungsnachricht zum Erstellen eines Benachrichtigungskanals eine gewünschte Gültigkeitsdauer des Benachrichtigungskanals und einen Benachrichtigungskanaltyp enthält,
wobei ein Typ des Benachrichtigungskanals eines von PUSH und PULL ist.

15. Server nach Anspruch 13,
wobei die Steuerung ferner dazu konfiguriert ist,
vom Benachrichtigungsverwaltungs-Client eine Anforderung zum Starten eines PUSH-Benachrichtigungsdienstes zu empfangen, falls ein Benachrichtigungstyp eine PUSH-Methode ist.

## Revendications

1. Procédé mis en œuvre par un client de gestion de notification dans un système de communication sans fil, le procédé consistant à :
recevoir, depuis un client de couche d'application verticale, VAL, un message de requête de gestion de notification pour recevoir une notification depuis un serveur VAL (402) ;
transmettre, vers un serveur de gestion de notification, un message de requête de création de canal de notification pour un canal de notification (404) ;
recevoir, depuis le serveur de gestion de notification, un message de réponse de création de canal de notification (404) comprenant un localisateur uniforme de ressource de rappel, URL ;
transmettre, vers le serveur de gestion de notification, un message d'ouverture de canal de notification (408) pour commencer à recevoir un message de notification sur la base du message de réponse de création de canal de notification ;
transmettre, vers le client VAL, un message de réponse de gestion de notification comprenant une indication d'état de succès ou d'échec pour commencer à recevoir la notification et l'URL de rappel (410) ;
recevoir, depuis le serveur de gestion de notification, un message de notification (420) comprenant un ID de client VAL et un ID de service VAL ; et
transmettre, vers le client VAL, le message de notification (422),
dans lequel l'URL de rappel est associée à un point de terminaison pour recevoir le message de notification depuis le serveur VAL.

2. Procédé selon la revendication 1,
dans lequel le message de requête de création de canal de notification comprend une durée de validité souhaitée du canal de notification et un type de canal de notification, et
dans lequel un type de canal de notification est l'un de PUSH ou PULL.

3. Procédé selon la revendication 1, consistant en outre à :
transmettre, vers le serveur de gestion de notification, une requête pour démarrer un service de notification PUSH dans le cas où un type de notification est une méthode PUSH.

4. Procédé selon la revendication 1, consistant en outre à :
recevoir, depuis le client VAL, un message de requête d'arrêt de réception de gestion de notification pour arrêter la réception de notification depuis le serveur VAL ;
transmettre, vers le serveur de gestion de notification, un message de requête de suppression de canal de notification pour supprimer le canal de notification ;
recevoir, depuis le serveur de gestion de notification, un message de réponse de suppression de canal de notification ; et
transmettre, vers le client VAL, une indication d'état de la requête d'arrêt de réception de gestion de notification,
dans lequel l'indication d'état de la requête d'arrêt de réception de gestion de notification indique un succès ou un échec de suppression de l'au moins un canal de notification.

5. Procédé mis en œuvre par un serveur de gestion de notification dans un système de communication sans fil, le procédé consistant à :
recevoir, depuis un client de gestion de notification, un message de requête de création de canal de notification (404) pour un canal de notification sur la base d'un message de requête de gestion de notification ;
transmettre, vers le client de gestion de notification, un message de réponse de création de canal de notification (406) comportant un localisateur uniforme de ressource de rappel, URL ;
recevoir, depuis le client de gestion de notification, un message d'ouverture de canal de notification (408) pour commencer à recevoir un message de notification sur la base du message de réponse de création de canal de notification ;
recevoir, depuis le serveur VAL, un message de notification (420) comportant un ID de client VAL et un ID de service VAL, généré par le serveur VAL ; et
transmettre, vers le client de gestion de notification, le message de notification (422),
dans lequel l'URL de rappel est associée à un point de terminaison pour recevoir le message de notification depuis le serveur VAL.

6. Procédé selon la revendication 5,
dans lequel le message de requête de création de canal de notification comporte une durée de validité souhaitée du canal de notification et un type de canal de notification,
dans lequel un type de canal de notification est l'un de PUSH ou PULL.

7. Procédé selon la revendication 5, consistant en outre à :
recevoir, depuis le client de gestion de notification, une requête pour démarrer un service de notification PUSH dans le cas où un type de notification est une méthode PUSH.

8. Procédé selon la revendication 5, consistant en outre à :
recevoir, depuis le client de gestion de notification, un message de requête de suppression de canal de notification pour supprimer le canal de notification sur la base d'un message de requête d'arrêt de réception de gestion de notification ; et
transmettre, vers le client de gestion de notification, un message de réponse de suppression de canal de notification.

9. Client de gestion de notification dans un système de communication sans fil, le client de gestion de notification comprenant :
un émetteur-récepteur, et
un contrôleur couplé à l'émetteur-récepteur et configuré pour :
recevoir, par le client de gestion de notification depuis un client de couche d'application verticale, VAL, un message de requête de gestion de notification pour recevoir une notification depuis un serveur VAL,
transmettre, vers un serveur de gestion de notification, un message de requête de création de canal de notification pour un canal de notification,
recevoir, depuis le serveur de gestion de notification, un message de réponse de création de canal de notification comportant un localisateur uniforme de ressource de rappel, URL,
transmettre, vers le serveur de gestion de notification, un message d'ouverture de canal de notification pour commencer à recevoir un message de notification sur la base du message de réponse de création de canal de notification,
transmettre, vers le client VAL, un message de réponse de gestion de notification comportant une indication d'état de succès ou d'échec pour commencer à recevoir la notification et l'URL de rappel,
recevoir, depuis le serveur de gestion de notification, un message de notification comportant un ID de client VAL et un ID de service VAL, et
transmettre, vers le client VAL, le message de notification,
dans lequel l'URL de rappel est associée à un point de terminaison pour recevoir le message de notification depuis le serveur VAL.

10. Client de gestion de notification selon la revendication 9, dans lequel le contrôleur est en outre configuré pour :
dans lequel le message de requête de création de canal de notification comporte une durée de validité souhaitée du canal de notification et un type de canal de notification, et
dans lequel un type de canal de notification est l'un de PUSH ou PULL.

11. Client de gestion de notification selon la revendication 9, dans lequel le contrôleur est en outre configuré pour :
transmettre, vers le serveur de gestion de notification, une requête pour démarrer un service de notification PUSH dans le cas où un type de notification est une méthode PUSH.

12. Client de gestion de notification selon la revendication 9, dans lequel le contrôleur est en outre configuré pour :
recevoir, depuis le client VAL, un message de requête d'arrêt de réception de gestion de notification pour arrêter la réception de notification depuis le serveur VAL ;
transmettre, vers le serveur de gestion de notification, un message de requête de suppression de canal de notification pour supprimer le canal de notification ;
recevoir, depuis le serveur de gestion de notification, un message de réponse de suppression de canal de notification ; et
transmettre, vers le client VAL, une indication d'état de la requête d'arrêt de réception de gestion de notification,
dans lequel l'indication d'état de la requête d'arrêt de réception de gestion de notification indique un succès ou un échec de suppression de l'au moins un canal de notification.

13. Serveur de gestion de notification dans un système de communication sans fil, le serveur comprenant :
un émetteur-récepteur, et
un contrôleur couplé à l'émetteur-récepteur et configuré pour :
recevoir, depuis un client de gestion de notification, un message de requête de création de canal de notification pour un canal de notification sur la base d'un message de requête de gestion de notification,
transmettre, vers le client de gestion de notification, un message de réponse de création de canal de notification comprenant un localisateur uniforme de ressource de rappel, URL,
recevoir, depuis le client de gestion de notification, un message d'ouverture de canal de notification pour commencer à recevoir un message de notification sur la base du message de réponse de création de canal de notification,
recevoir, depuis le serveur VAL, un message de notification comportant un ID de client VAL et un ID de service VAL, généré par le serveur VAL, et
transmettre, vers le client de gestion de notification, le message de notification,
dans lequel l'URL de rappel est associée à un point de terminaison pour recevoir le message de notification depuis le serveur VAL.

14. Serveur selon la revendication 13,
dans lequel le message de requête de création de canal de notification comporte une durée de validité souhaitée du canal de notification et un type de canal de notification,
dans lequel un type de canal de notification est l'un de PUSH ou PULL.

15. Serveur selon la revendication 13,
dans lequel le contrôleur est en outre configuré pour :
recevoir, depuis le client de gestion de notification, une requête pour démarrer un service de notification PUSH dans le cas où un type de notification est une méthode PUSH.
